# EUROPEAN PATENT APPLICATION

(11) **EP 4 793 020 A1**
(43) Date of publication of application: **19.08.2026**
(21) Application number: 24877298.0
(22) Date of filing: 11.10.2024
(51) Int. Cl.: B29C 49/06, B29C 45/26, B29C 49/48, B29C 49/64

(54) **BLOW MOLDING APPARATUS FOR RESIN CONTAINER**

(30) Priority: 13.10.2023 JP 2023177247
(71) Applicant: Nissei ASB Machine Co., Ltd., Komoro-shi, Nagano 384-8585 (JP)
(72) Inventor: MURATA, Atsushi, Komoro-shi, Nagano 384-8585 (JP); OGIHARA, Kazuki, Komoro-shi, Nagano 384-8585 (JP)
(74) Representative: Mewburn Ellis LLP
(86) International application number: PCT/JP2024/036508
(87) International publication number: WO 2025/079704

(57) **Abstract**

A blow-molding apparatus for a resin container includes: an injection molding part that injects a resin material into an injection mold to produce a preform having a bottomed cylindrical shape; a temperature adjusting part that adjusts a temperature of the preform obtained by the injection molding part; and a blow-molding part that blow-molds the preform having the temperature that has been adjusted in a state of having residual heat from injection molding to produce a resin container. The injection molding part includes: an injection device that injects the resin material into the injection mold by control of a first motor; a mold opening and closing mechanism that opens and closes the injection mold by a second motor; and a hydraulic cylinder that clamps the injection mold after the injection mold is closed.

## Description

### Technical Field

The present invention relates to a blow-molding apparatus for a resin container.

### Background Art

For example, regarding a blow-molding apparatus for a resin container of a hot parison type, there is a demand for further shortening a molding cycle and suppressing running costs in order to improve productivity. Therefore, as disclosed in Patent Literature 1 or the like, in this type of blow-molding apparatus, electrification is in progress in place of hydraulic drive.

### Citation List

### Patent Literature

Patent Literature 1: JP 4912715 B2

### Summary of Invention

### Technical Problem

In a case where the blow-molding apparatus is wholly electrified, however, the driving part is increased in size at a position where relatively large force is necessitated, thereby leading to a drawback that the cost of the apparatus is rather increased.

Therefore, the present invention has been made in view of such a problem, and an object of the present invention is to provide a blow-molding apparatus for a resin container so as to be capable of achieving electrification and also suppressing the cost of the apparatus.

### Solution to Problem

A blow-molding apparatus for a resin container according to one aspect of the present invention includes: an injection molding part that injects a resin material into an injection mold to produce a preform having a bottomed cylindrical shape; a temperature adjusting part that adjusts a temperature of the preform obtained by the injection molding part; and a blow-molding part that blow-molds the preform having the temperature that has been adjusted in a state of having residual heat from injection molding to produce a resin container. The injection molding part includes: an injection device that injects the resin material into the injection mold by control of a first motor; a mold opening and closing mechanism that opens and closes the injection mold by a second motor; and a hydraulic cylinder that clamps the injection mold after the injection mold is closed.

### Advantageous Effects of Invention

According to one aspect of the present invention, it becomes possible to provide a blow-molding apparatus for a resin container so as to be capable of achieving electrification and also suppressing the cost of the apparatus.

### Brief Description of Drawings

Fig. 1 is a schematic plan view of a blow-molding apparatus according to the present embodiment.
Fig. 2 is a schematic side view illustrating a mold open state of an injection molding part in Fig. 1.
Fig. 3 is a schematic side view illustrating a mold closed state of the injection molding part in Fig. 1.
Fig. 4 is a front view illustrating the mold open state of the injection molding part.
Fig. 5 is a longitudinal sectional view corresponding to Fig. 4.
Fig. 6 is a view illustrating an example of a lifting and lowering mechanism of a temperature adjusting part.
Fig. 7 is a view illustrating a configuration example of a blow-molding part in the mold open state.
Fig. 8 is a view illustrating a configuration example of the blow-molding part in the mold closed state.
Fig. 9 is a flowchart illustrating respective steps in blow-molding by the blow-molding apparatus according to the present embodiment.

### Description of Embodiments

Hereinafter, embodiments of the present invention will be described with reference to the drawings.

In the embodiments, in order to facilitate understanding, structures and elements other than the main parts of the present invention will be described in a simplified or omitted manner. In addition, in the drawings, the same elements are denoted by the same reference numerals. Note that the shapes, dimensions, and the like of the respective elements illustrated in the drawings are schematically illustrated, and do not indicate actual shapes, dimensions, or the like.

### <Description of Blow-Molding Apparatus>

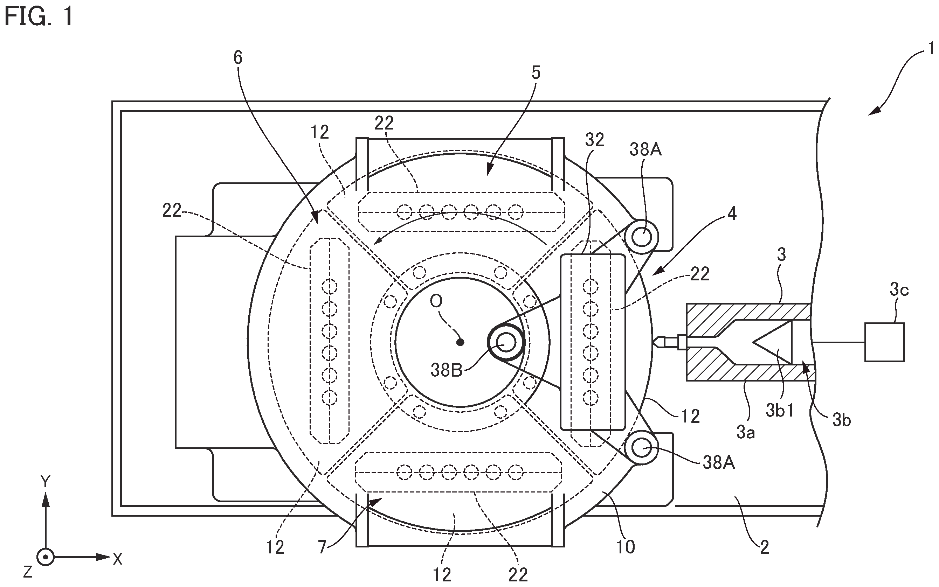

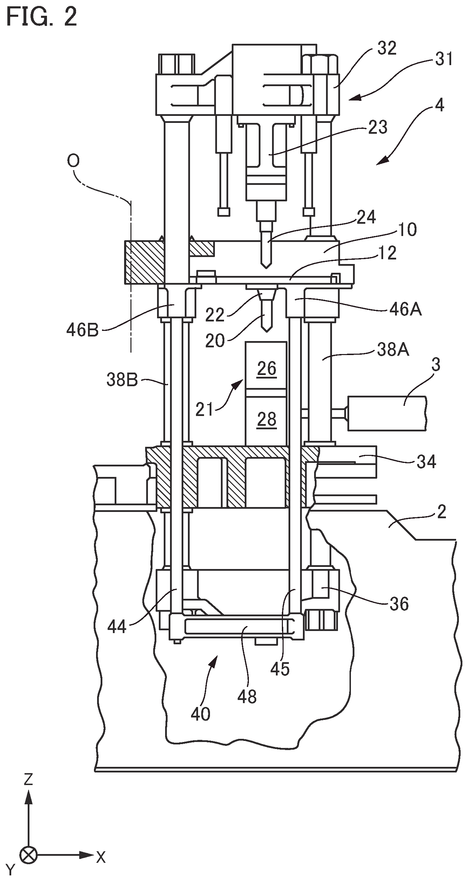

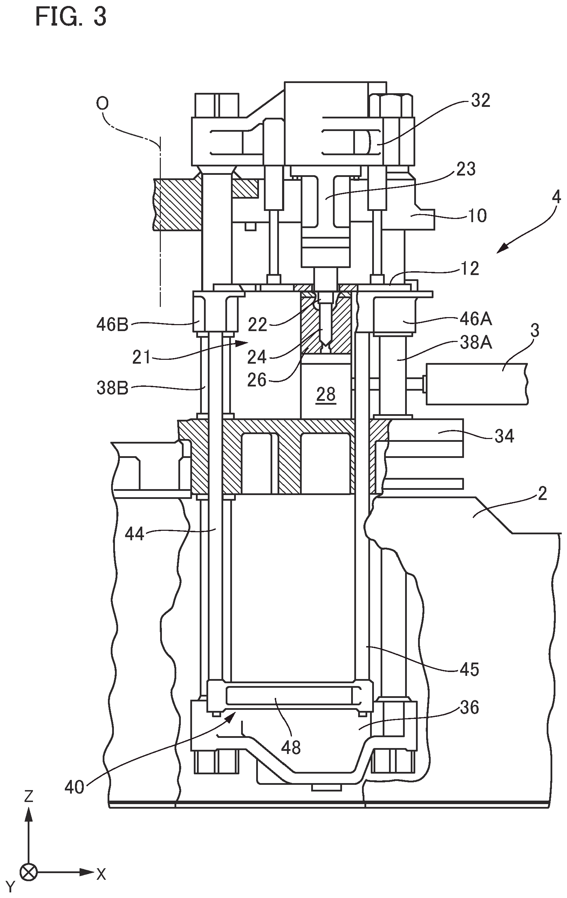

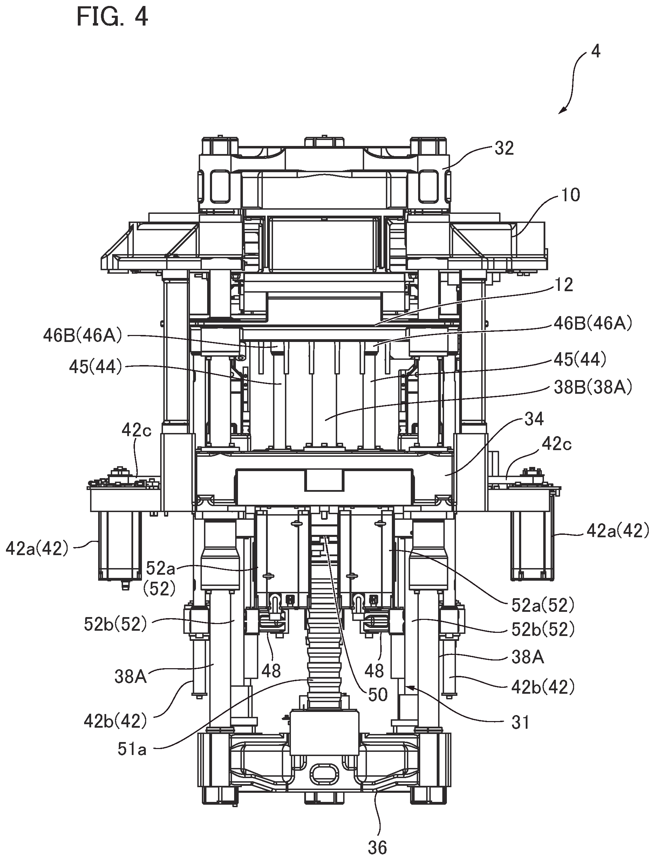

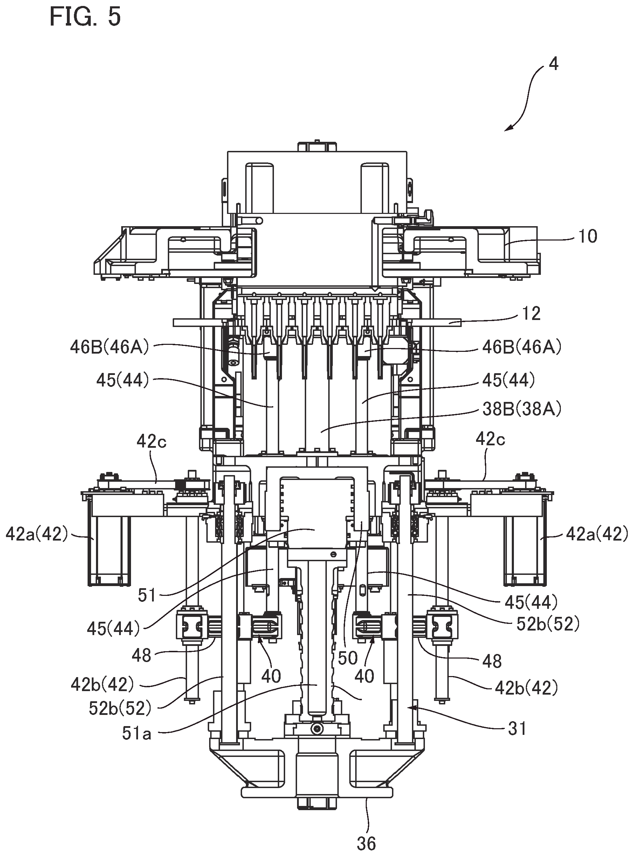

Fig. 1 is a schematic plan view of a blow-molding apparatus including a mold opening and closing device. Fig. 2 is a schematic side view illustrating a mold open state of an injection molding part in Fig. 1. Fig. 3 is a schematic side view illustrating a mold closed state of the injection molding part in Fig. 1. Fig. 4 is a front view illustrating the mold open state of the injection molding part. Fig. 5 is a longitudinal sectional view corresponding to Fig. 4.

A blow-molding apparatus 1 according to the present embodiment is an apparatus of a hot parison system (also referred to as one stage system) that blow-molds a preform 20 by utilizing residual heat (internal heat quantity) during injection molding without cooling the preform 20 to room temperature.

As illustrated in Figs. 1 to 3, the blow-molding apparatus 1 includes: a machine base 2; and an upper base 10, which is disposed above the machine base 2 (Z direction in the drawing). The upper base 10 is supported by a plurality of support posts (not illustrated) that stand upward from the machine base 2.

In the blow-molding apparatus 1, an injection molding part 4, a temperature adjusting part 5, a blow-molding part 6, and a take-out part 7 are disposed in a space between the machine base 2 and the upper base 10. In addition, the operation of each element of the blow-molding apparatus 1 is controlled by a controller (not illustrated).

The injection molding part 4, the temperature adjusting part 5, the blow-molding part 6, and the take-out part 7 are disposed in positions respectively rotated by a predetermined angle (for example, 90 degrees) with reference to a rotation center O of transfer plates 12 to be described later. Note that in the blow-molding apparatus 1, the temperature adjusting part 5 or the take-out part 7 may not be necessarily disposed.

Here, in the position of the injection molding part 4 of the upper base 10, an upper mold clamping plate 32 of the injection molding part 4 and an injection core mold 24 illustrated in Fig. 2 are each disposed on an upper surface side. In the position of the temperature adjusting part 5 of the upper base 10, a temperature adjusting rod and a lifting and lowering mechanism of the temperature adjusting rod (neither of them is illustrated) are disposed on the upper surface side. In the position of the blow-molding part 6 of the upper base 10, a stretching rod and a lifting and lowering mechanism of the stretching rod (neither of them is illustrated) are disposed on the upper surface side. A take-out cam (not illustrated) is also disposed in the position of the take-out part 7 of the upper base 10.

In addition, four transfer plates 12 each having a fan shape are disposed at every predetermined angle (for example, 90 degrees) on a lower surface of the upper base 10 and above the machine base 2. The four transfer plates 12 are respectively guided by a plurality of support members (not illustrated) fixed to the lower surface of the upper base 10 and reception members 46A and 46B (refer to Figs. 2 and 3), which are provided in the injection molding part 4, and intermittently circulate and move along a rotation direction with the rotation center O as a rotation axis. The preform 20 (or the container) held by the transfer plates 12 is conveyed through the injection molding part 4, the temperature adjusting part 5, the blow-molding part 6, and the take-out part 7 sequentially in this order by the rotation of the transfer plates 12.

Further, as illustrated in Figs. 2 and 3, a neck mold 22 for holding the preform is provided on the lower surface of each transfer plate 12 in such a manner that the axial direction of the preform 20 extends along a vertical direction. An opening portion is also formed on an upper surface of the neck mold 22 in each transfer plate 12, and the injection core mold 24, the blow core, the stretching rod, and the like can be inserted into and removed from the preform 20 from above through the opening portion.

### (Injection Molding Part 4)

The injection molding part 4 includes: an injection mold 21; a mold opening and closing mechanism 31, which opens and closes the injection mold 21; and a lifting and lowering mechanism 40, which lifts up and down the neck mold 22 or the transfer plate 12 to which the neck mold 22 is fixed with respect to an injection cavity mold 26. An injection device 3, which supplies a resin material that is a raw material of the preform, is connected with the injection molding part 4.

Here, the injection device 3 includes an injection cylinder 3a, an injection screw 3b, and a drive actuator 3c. Note that the injection device 3 may further include a shatoff device (not illustrated) that cuts off between the injection screw 3b and an injection nozzle, and a pressure holding device (not illustrated) for holding the pressure after injection of the resin material.

The injection screw 3b is held inside the injection cylinder 3a. The injection screw 3b is rotatable and movable forward and backward with respect to the injection cylinder 3a by the operation of the drive actuator 3c. In addition, a hopper (not illustrated) that supplies a resin material is connected with the injection cylinder 3a, and the resin material is supplied from the hopper to the inside of the injection cylinder 3a. The injection cylinder 3a is set at a high temperature equal to or higher than the melting point of the resin material in order to melt the resin material in a solid state accommodated between an inner wall of the injection cylinder 3a and a groove of the injection screw 3b.

A screw head 3b1 is provided at a tip end of the injection screw 3b. The injection screw 3b rotates and heats the resin material in a solid state inside the injection cylinder 3a to bring the resin material into a molten state (a state in which the resin material is plasticized). In a metering step of an injection molding step, the injection screw 3b moves backward while filling (charging) the molten resin material ahead of the screw head 3b1. Then, after the filling of the resin material ends, in an injecting step of the injection molding step, the injection screw 3b is moved forward in a non-rotating state by the drive actuator 3c, and thus the molten resin material is injected.

In addition, the drive actuator 3c of the injection device 3 is a servomotor (an example of a first motor), and drives the screw head 3b1 of the injection screw 3b in a direction of moving forward or backward via a screw feeding mechanism of a ball screw. Note that the drive actuator 3c includes: a first servomotor for rotating the injection screw 3b in the metering step or the like; and a second servomotor for moving the injection screw 3b forward or backward in a non-rotating state in the injecting step or the like.

Further, the above injection mold 21 includes: an injection core mold 24, which defines the internal shape of the preform 20; the injection cavity mold 26, which defines the external shape of the preform 20; a hot runner mold 28, which guides the molten resin that has been supplied from the injection device 3 to a mold space of the injection mold 21; and the neck mold 22, which defines an external shape of a neck portion (an opening portion) of the preform 20. The injection cavity mold 26 and the hot runner mold 28 are fixed to a lower mold clamping plate 34, which is attached to the machine base 2. On the other hand, the injection core mold 24 is attached to the upper mold clamping plate 32, which is supported by tie bars 38A and 38B, and is capable of moving up and down in the vertical direction (Z direction that is a perpendicular direction).

In the injection molding part 4, the injection cavity mold 26, the injection core mold 24, and the neck mold 22 of the transfer plate 12 are closed to form a mold space having a preform shape. Then, by injecting a resin material from the injection device 3 into the mold space having such a preform shape, the preform 20 is produced in the injection molding part 4.

The lifting and lowering mechanism 40 is an example of a transfer plate lifting and lowering mechanism, and includes: the reception members 46A and 46B, which hold the transfer plates 12; lifting and lowering rods 44 and 45, which extend downward from the reception members 46A and 46B; and a driving part 42 (not illustrated in Figs. 2 and 3), which lifts up and down the reception members 46A and 46B via the lifting and lowering rods 44 and 45. The reception member 46A is disposed on an outer side in a rotational radius direction of the transfer plates 12, and is connected with the lifting and lowering rod 45. The reception member 46B is disposed on near the rotation center O of the transfer plate 12, and is connected with the lifting and lowering rod 44. The lifting and lowering rods 44 and 45 are coupled by a coupling member 48 in the machine base 2.

As illustrated in Figs. 4 and 5, the driving part 42 includes: a servomotor 42a (an example of a third motor); a ball screw 42b, which is driven by the servomotor 42a; and a belt 42c, which transfers the dynamic power of the servomotor 42a to the ball screw 42. Two driving parts 42 are respectively fixed to a lower surface side and a lateral surface side of the lower mold clamping plate 34, and are disposed in the machine base 2. The ball screw 42b of the driving part 42 is coupled with the coupling member 48. By lifting up and down the coupling member 48 inside the machine base 2 by the driving of the servomotors 42a of the driving parts 42, the lifting and lowering mechanism 40 lifts up and down the reception members 46A and 46B in the vertical direction via the lifting and lowering rods 44 and 45. Accordingly, the transfer plates 12, which are held by the reception members 46A and 46B, move up and down in the vertical direction.

The mold opening and closing mechanism 31 lifts up and down the upper mold clamping plate 32, which has a substantially triangular shape, and which is disposed above the transfer plates 12, with respect to the machine base 2. A plurality of (for example, four) injection core molds 24 are fixed to a lower surface of the upper mold clamping plate 32 via a fixing plate 23. The upper mold clamping plate 32 is fixed to upper ends of a plurality of (for example, three) tie bars 38A and 38B, which extend upward from the machine base 2, and each of which has a columnar shape. Two tie bars 38A are disposed on an outer side in the rotational radius direction, and one tie bar 38B is disposed to be closer to the rotation center O. The tie bars 38A and 38B are fixed in the vicinities of respective apexes of the triangular shape of the upper mold clamping plate 32.

In addition, the lower ends of the tie bars 38A and 38B are respectively fixed to a lower movable plate 36, which is disposed in the machine base 2. Further, as illustrated in Figs. 4 and 5, a mold clamping cylinder 50 and a driving part 52 are disposed between the lower surface of the lower mold clamping plate 34 and the lower movable plate 36. A shutter mechanism (not illustrated) that opens and closes a pressure receiving plate (not illustrated) capable of abutting a lower end of a rod member 51a (to be described later) is provided on an upper surface of the lower movable plate 34. When the upper mold clamping plate 32 is lifted up, the shutter mechanism opens the pressure receiving plate to make the rod member 51a insertable into the lower movable plate 36 (to eliminate interference between the rod member 51a and the lower movable plate 36). In addition, the shutter mechanism closes the pressure receiving plate when the upper mold clamping plate 32 is lifted down and located at a mold closing position (or a mold clamping position), and causes a lower end of the rod member 51a to abut the pressure receiving plate in the mold clamping operation so as to enable pressure reception.

The mold clamping mechanism includes at least the mold clamping cylinder 50, a piston rod 51, and the rod member (a pressure receiving rod) 51a, which is fixed to a lower end of the piston rod 51 and extends downward. The mold clamping cylinder 50 is fixed to the lower surface of the lower mold clamping plate 34, and is disposed in the machine base 2. The mold clamping cylinder 50 is, for example, a hydraulic cylinder, and has a function of applying high-pressure mold clamping force in a mold closing direction with respect to the injection mold 21 during injection molding.

The driving part 52 includes: a servomotor 52a (an example of a second motor); a mold opening and closing ball screw 52b, which is driven by the servomotor 52a; and a belt (not illustrated) that transfers the dynamic power of the servomotor 52a to the ball screw 52b. Two driving parts 52 are fixed to the lower surface of the lower mold clamping plate 34, and are disposed in the machine base 2. The mold opening and closing ball screw 52b of the driving part 52 is connected with the lower movable plate 36. By lifting up and down the lower movable plate 36 in the machine base 2 by the driving of the servomotor 52a of the driving part 52, the mold opening and closing mechanism 31 lifts up and down the upper mold clamping plate 32 in the vertical direction via the tie bars 38A and 38B. Accordingly, a mold opening and closing operation of lifting up and down the injection core mold 24, which is fixed to the upper mold clamping plate 32, in the vertical direction is performed.

Note that also when the injection molding part 4 is opened, the neck mold 22 of the transfer plate 12 is not released, and holds and conveys the preform 20 as it is. It is possible to appropriately set the number of the preforms 20 to be simultaneously molded by the injection molding part 4 (that is, the number of containers that can be simultaneously molded by the blow-molding apparatus 1). As an example, in the drawing, a configuration in which six preforms 20 are conveyed is illustrated.

In addition, although there is no particular limitation, the servomotor 42a and the belt 42c of the driving part 42 and the servomotor 52a and a belt (not illustrated) of the driving part 52 may be disposed below the lower mold clamping plate 34. Further, one of the driving parts 42 and 52 may be positioned on the injection device 3 side (for example, the servomotor 52a and the belt (not illustrated) of the driving part 52 are positioned on one side), and the other one of the driving parts 42 and 52 may be positioned on the lateral surface side of the lower mold clamping plate 34 on the opposite side of the injection device 3 (for example, the servomotor 42a and the belt 42c of the driving part 42 are positioned on the other side). By disposing the driving parts 42 and 52 as described above, it becomes possible to suppress the driving parts 42 and 52 from hindering molding work or mold replacing work by the operator.

### (Temperature Adjusting Part 5)

The temperature adjusting part 5 adjusts the temperature of the preform 20 to a blow temperature (for example, about 90°C to 105°C) suitable for the final blow, by equalizing the temperature or removing uneven temperature of the preform 20 that has been produced by the injection molding part 4 using a mold unit, not illustrated. The temperature adjusting part 5 in the present embodiment also has a function of cooling the preform 20 having a high temperature after injection molding.

The mold unit of the temperature adjusting part 5 is configured with, for example, a combination of a heating pot that is a cavity mold (a temperature adjusting mold disposed on a lower side), which accommodates the preform 20, and which heats the preform 20 from the periphery in a non-contact manner, and a mold (a temperature adjusting mold disposed on an upper side, for example, a temperature adjusting rod or an air introducing member) inserted into the preform 20. Note that the mold unit may be configured to blow compressed air into the preform 20 for cooling and adjusting its temperature. For example, the above mold unit has a configuration including a cavity mold (a temperature adjusting pot) capable of accommodating the preform 20, and an air introducing member, which abuts the neck portion, and which introduces the compressed air into the preform 20.

In the temperature adjusting part 5, a cavity mold C (a heating pot, a temperature adjusting pot) that accommodates the preform 20 in the mold unit can be lifted up and down in the vertical direction by a mold lifting and lowering mechanism driven by a servomotor 67 (an example of a fourth motor).

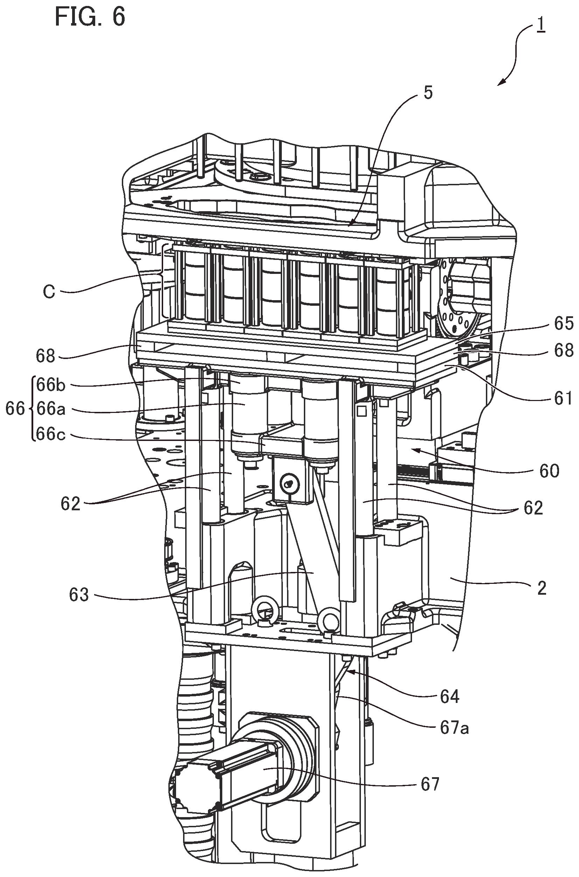

Fig. 6 is a view illustrating an example of a mold lifting and lowering mechanism 60 of the temperature adjusting part 5. The mold lifting and lowering mechanism 60 includes: a support base 61, which is disposed below the cavity mold C; a plurality of guide rods 62, which guide the support base 61 in the vertical direction; and a crank part 64, which includes a crank rod 63. The crank rod 63 has a substantially letter L shape. An upper end of the crank rod 63 is pivotally supported by a lower portion of the support base 61. A lower end of the crank rod 63 is pivotally supported by an upper portion of a link member 67a, which is fixed to the rotation shaft of the servomotor 67. The crank part 64 drives the crank rod 63, which is connected with the lower portion of the support base 61, via the link member 67a in accordance with the rotation of the rotation shaft of the servomotor 67, and lifts up and down the support base 61 in the vertical direction. When the support base 61 is lifted up, the preform 20 held by the transfer plate 12 is accommodated in the cavity mold C, which is placed on the support base 61. When the support base 61 is lifted down, the cavity mold C, which is placed on the support base 61, moves away from the preform 20 held by the transfer plate 12. This enables the preform 20 to be inserted into and removed from the cavity mold C, without moving the transfer plate 12 or the preform 20 in the vertical direction in the temperature adjusting part 5.

In addition, a height adjusting mechanism (a buffer mechanism to accommodate changes in mold thickness) 66 is disposed below the support base 61 between the cavity mold C. The height adjusting mechanism 66 is disposed between the support base 61 and the upper end of the crank rod 63. The height adjusting mechanism 66 includes: a first fixing plate 66b, which is coupled with a lower surface of the support base 61; a second fixing plate 66c, which pivotally supports the upper end of the crank rod 63; and a height adjusting member 66a, which is disposed between the first fixing plate 66b and the second fixing plate 66c. In addition, the height adjusting member 66a includes an elastic member (a compression coil spring or the like). One or more height adjusting members 66a are preferably provided between the first fixing plate 66b and the second fixing plate 66c, and four height adjusting members 66a are preferably provided respectively at four corners of these fixing plates. The second fixing plate 66c is movable up and down with respect to the height adjusting member 66a. Further, a spacer member 68 may be disposed between an upper surface of the support base 61 and a plate-shaped member 65, to which the cavity mold C is fixed.

The cavity mold C of the temperature adjusting part 5 expands at a high temperature. Thus, the size (for example, the length) of the cavity mold C is slightly changed between a low-temperature state when the cavity mold C is fixed to the support base 61 and a hightemperature state during the molding operation in which the cavity mold C is set at a predetermined temperature. For example, in a blow-molding method (for example, the blow-molding method disclosed in Japanese Patent No. 6505344 B2) for shortening the cooling period of the preform 20 in the injection mold after pressure holding is completed, the compressed air is blown into the preform 20 for cooling and adjusting the temperature in the temperature adjusting part 5. In this situation, it is necessary to bring the air introducing member and the cavity mold C (a pot mold) into close contact with each other in the temperature adjusting part 5. However, a situation in which they cannot be brought into close contact with each other may occur at the top dead center of the crank part 64. In order to bring them into close contact with each other with strong force, it is necessary to press the support base 61 upward at a position where the upper end and the lower end of the crank rod 63 are present on a vertical line (a straight line shape) and the upper end of the crank part 64 (the crank rod 63) reaches the top dead center (a position where the strongest mold closing force is generated). However, when the cavity mold C expands, the support base 61 is lowered by the expanded length of the cavity mold C at mold closing positions of the air introducing member and the cavity mold C. In this case, the support base 61 cannot be pressed at the position of the top dead center of the crank part 64 (the crank rod 63), and the pressing force onto the support base 61 is weakened. As a result, the force of air from the air introducing member causes them to easily open the mold at the time of molding.

The height adjusting mechanism 66 is disposed below the support base 61. Therefore, even though the size (the length) of the cavity mold C is changed, the height adjusting member 66a is compressed and the second fixing plate 66c moves upward, so the support base 61 can be pressed upward at the position where the upper end of the crank member 64 (or the crank rod 63) reaches the top dead center. Therefore, it becomes possible to avoid a situation in which the air introducing member and the cavity mold C (the pot mold) are not brought into close contact with each other at the top dead center of the crank part 64, thereby leading to air leakage. It also becomes possible to close the temperature adjusting mold disposed on the lower side and the temperature adjusting mold disposed on the upper side with high positional accuracy in the temperature adjusting part 5.

### (Blow-Molding Part 6)

The blow-molding part 6 performs stretch blow-molding on the preform 20 having the temperature that has been adjusted by the temperature adjusting part 5, and produces a container.

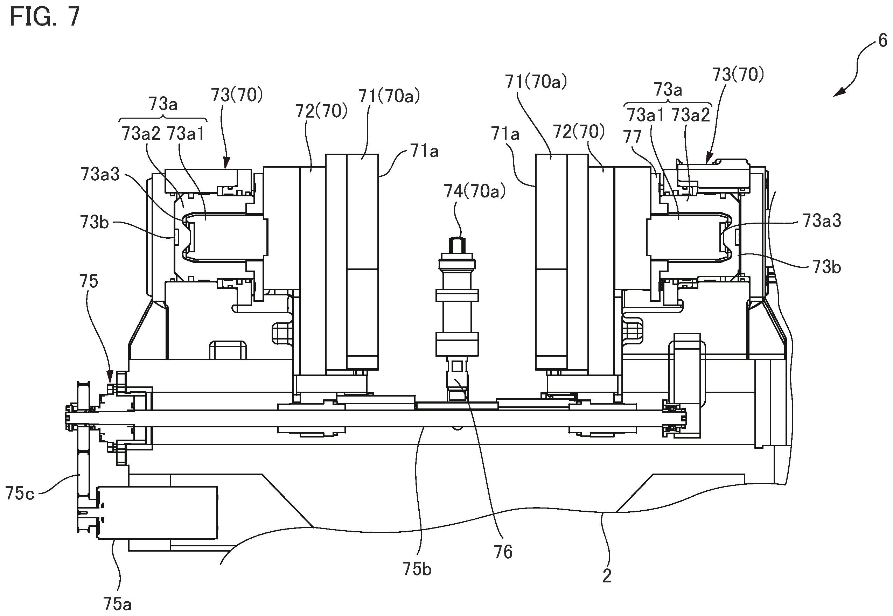

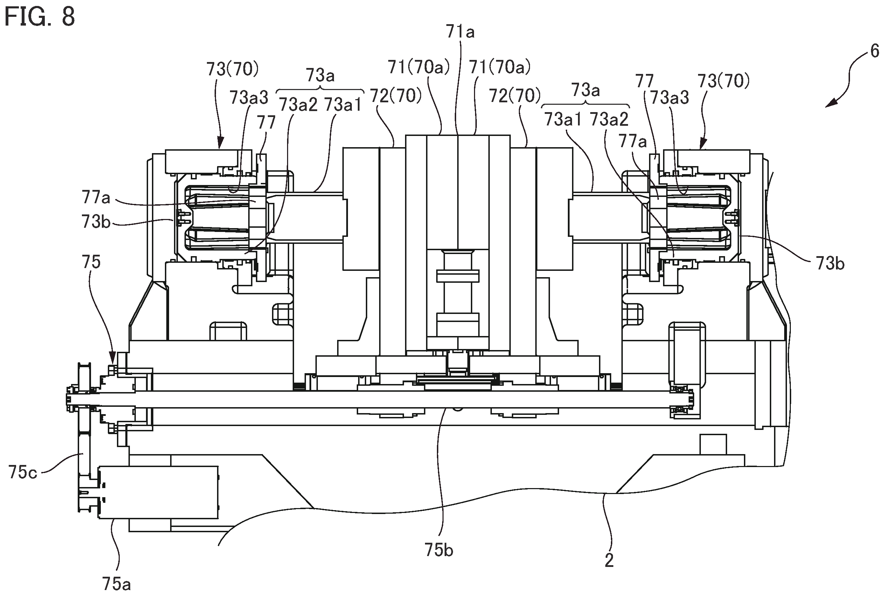

Fig. 7 is a view illustrating a configuration example of the blow-molding part 6 in the mold open state, and Fig. 8 is a view illustrating a configuration example of the blow-molding part 6 in the mold closed state.

The blow-molding part 6 includes a blow-mold opening and closing mechanism 70. A blow-mold unit 70a is coupled with the blow-mold opening and closing mechanism 70. The blow-mold opening and closing mechanism 70 includes mold clamping plates 72, mold clamping parts 73, and a mold opening and closing part 75, on the machine base 2. The blow-mold unit 70a includes at least blow cavity split molds 71 and a bottom mold 74. A pair of mold clamping plates 72 and a pair of mold clamping parts 73 are disposed on the machine base 2. A pair of blow cavity split molds 71 are respectively coupled with the pair of mold clamping plates 72. The bottom mold 74 is coupled with a bottom mold lifting and lowering mechanism disposed between the pair of mold clamping plates 72. Note that the blow-molding part 6 further includes a first lifting and lowering mechanism that moves the stretching rod up and down, and a second lifting and lowering mechanism that lifts and lowers the air introducing member including a blow core, although illustrations of them are omitted. The stretching rod and the air introducing member are each a part of the mold unit 70a, are disposed on an upper side of a mold closing position of the blow cavity split molds 71, and are inserted into the preform 20.

The pair of blow cavity split molds 71 are molds having a molding space (a cavity) that defines the shape of the container. The blow cavity split molds 71 are separated by parting surfaces 71a along the vertical direction in Figs. 7 and 8, and are configured to be openable and closable in a left-right direction in Figs. 7 and 8. The blow cavity split molds 71 form a blow cavity for blow-molding the preform 20 (not illustrated in Fig. 8) into a predetermined container shape in the mold closed state in Fig. 8. In addition, the bottom mold 74 is a mold that defines the shape of the bottom surface of the container, and is disposed to be capable of being lifted up and down below the mold closing position of the blow cavity split molds 71.

The pair of mold clamping plates 72 are disposed to face each other across the blow cavity split molds 71. To each of them, a back surface of the blow cavity split mold 71 (a surface on the opposite side of the parting surface 71a) or a back surface of a blow-mold fixing plate, with which the blow cavity split mold 71 is coupled, is fixed. A piston 73a of the mold clamping part 73 is connected with the back surface of each mold clamping plate 72. Accordingly, the mold clamping force from the mold clamping part 73 is transferred to the blow cavity split mold 71 via the mold clamping plate 72.

The pair of mold clamping parts 73 are hydraulic actuators each including the piston 73a and a cylinder 73b. The cylinder 73b of the mold clamping part 73 is fixed onto the machine base 2, and the piston 73a is linearly moved in the mold closing direction by the control of the hydraulic pressure so as to drive the mold clamping plate 72. In the mold closed state of Fig. 8, the mold clamping parts 73 clamp the mold, by pressurizing the blow cavity split molds 71 in the mold closing direction. The piston 73a includes: a first piston 73a1, which is coupled with the mold clamping plate 72; and a second piston 73a2, which is accommodated in the cylinder 73b, which is movable forward and backward, and which includes an accommodation space 73a3 in the inside for allowing the first piston 73a1 to enter. Note that in each mold clamping part 73, a spline (not illustrated) is formed on the piston 73a1, and a reception member 77 corresponding to the shape of the spline is provided on the cylinder 73b. Then, the mold clamping part 73 includes a shutter mechanism 77a (a part of the reception member 77), which switches between an interference state and a non-interference state with respect to the spline of the piston 73a1 in accordance with the rotation of the reception member 77 by a motor member (not illustrated), and which fixes the position of the piston 73a1.

The clamping operation of the pair of blow cavity split molds 71 will be described as follows. First, the piston 73a1 and the clamping plate 71 are moved in the mold closing direction by the mold opening and closing part 75 (to be described later), and the piston 73a1 is moved out of the accommodation space 73a3 of the piston 73a2, and is stopped at a position where no interference with the reception member 77 occurs. Next, the reception member 77 on the cylinder 73b side is rotated by a motor (not illustrated) so that a spline shape corresponding portion of the reception member 77 interferes with the spline of the piston 73a1. Lastly, pressure oil is caused to flow through the cylinder 73b, and the mold clamping force is made to transfer to the second piston 73a2, the reception member 77, the first piston 73a1, and the mold clamping plate 72 sequentially in this order to clamp the blow cavity split mold 71. The above operation is reversed at the time of opening the mold.

In addition, the mold opening and closing part 75 includes: a servomotor 75a (an example of a fifth motor); and a left-right screw 75b, which extends in the mold opening and closing direction, and which includes threads engraved in different directions between one side and the other side in its axial direction. The left-right screw 75b is coupled with the servomotor 75a by a belt 75c, and the mold clamping plates 72 are directly or indirectly coupled respectively with threaded portions in different directions of the left-right screw 75b. In the mold opening and closing part 75, when the left-right screw 75b rotates by being driven by the servomotor 75a, the pair of mold clamping plates 72 are driven in the mold opening direction or the mold closing direction along the left-right screw 75b.

### (Take-Out Part 7)

The take-out part 7 releases the neck mold 22 with a take-out cam, and takes out the container that has been produced by the blow-molding part 6 from the blow-molding apparatus 1. The container that has been taken out by the take-out part 7 is put into a box, or is conveyed to a filling line.

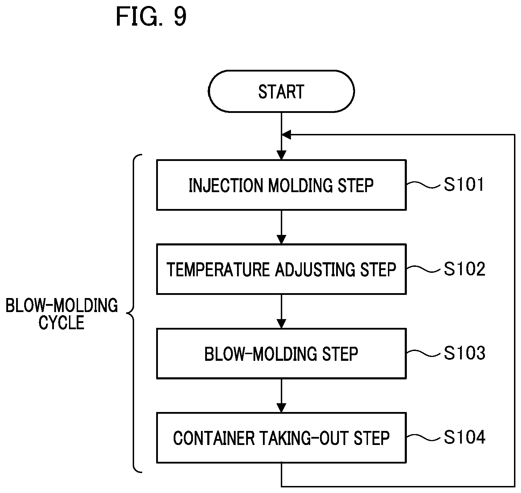

Fig. 9 is a flowchart illustrating each step (a blow-molding cycle) in blow-molding by the blow-molding apparatus 1 according to the present embodiment.

### (Step S101: Injection Molding Step)

First, in the injection molding part 4, a resin is injected from the injection device 3 into a preform-shaped mold space formed by the injection cavity mold 26, the injection core mold 24, and the neck mold 22, and the preform 20 is produced.

After the injection molding step ends, the transfer plates 12 rotate by a predetermined angle, and the preform 20 held by the neck mold 22 is conveyed to the temperature adjusting part 5.

Here, the injection device 3 of the injection molding part 4 is driven by the motor (3c). Thus, the responsiveness and the positional accuracy of the injection screw 3b in a metering operation and an injecting operation of the resin material are higher than those in the case of hydraulic pressure control, and the preform 20 is easily molded with high quality and homogeneity. In addition, the shape accuracy and the like of the preform 20 are improved, and thus the quality and reproducibility of the blow-molded containers are also improved. Further, the adjustment of the preform 20 in the injection molding part 4 becomes relatively facilitated by electrification of the injection device 3, so that molding defects in the entire apparatus are reduced, and the amount of resin to be wasted can be suppressed.

In addition, the mold opening and closing mechanism 31 and the lifting and lowering mechanism 40 of the injection molding part 4 are both driven by the motors (52a and 42a). Therefore, the responsiveness and the position accuracy are higher, and the dry time is shorter than those in the case where the mold opening and closing operation of the injection mold 21 and the operation of lifting up and down the transfer plate 12 are performed by hydraulic pressure. Further, in the above mold opening and closing mechanism 31 and the lifting and lowering mechanism 40, power consumption can be reduced and the cooling water for the operation hydraulic fluid can also be reduced as compared with the hydraulic pressure control that necessitates driving of the motor all the time for maintaining the hydraulic pressure.

On the other hand, the injection mold 21 in the injection molding part 4 is clamped by the mold clamping cylinder 50, which is a hydraulic cylinder. By using the hydraulic mechanism for clamping the injection mold 21, which necessitates a large load, it becomes possible to significantly suppress the cost of the apparatus as compared with a configuration of clamping the mold using a motor.

### (Step S102: Temperature Adjusting Step)

Subsequently, the temperature adjusting part 5 makes a temperature adjustment for bringing the temperature of the preform 20 close to a temperature suitable for the final blow.

In the temperature adjusting step, the preform 20 is accommodated in the cavity mold of the mold unit by the driving of the mold lifting and lowering mechanism 60. Subsequently, the temperature adjusting rod is inserted into the preform 20 accommodated in the above cavity mold.

In the temperature adjusting step, the temperature of the preform 20 is adjusted by the cavity mold or the temperature adjusting rod so that the temperature of the preform 20 does not become equal to or lower than a temperature suitable for blow-molding, and furthermore, the uneven temperature that has occurred at the time of injection molding is also reduced. Then, the temperature of the preform 20 is maintained at the blow temperature until the blow-molding is performed.

After the temperature adjusting step, the transfer plates 12 rotate by a predetermined angle, and the preform 20 having the adjusted temperature and held by the neck mold 22 is conveyed to the blow-molding part 6.

Here, in the temperature adjusting part 5, since the mold lifting and lowering mechanism 60 for the cavity mold is driven by the motor, the responsiveness and position accuracy are higher, and the dry time is shorter than those in the case where the cavity mold is lifted up or down using the hydraulic pressure. In addition, in the above mold lifting and lowering mechanism 60, the power consumption can be reduced and the cooling water for the operation hydraulic fluid can also be reduced as compared with the hydraulic pressure control that necessitates driving of the motor all the time for maintaining the hydraulic pressure.

### (Step S103: Blow-Molding Step)

Subsequently, the container is blow-molded in the blow-molding part 6.

First, a blow-molding mold is closed to accommodate the preform 20 in its inside, and the air introducing member is inserted into the neck portion of the preform 20. Then, the blow air is introduced into the preform 20 from the air introducing member while the air introducing member that also serves as the stretching rod is being lifted down. Accordingly, the preform 20 is bulged and molded to be in close contact with the blow-molding mold, and is blow-molded to be a container.

Here, the pair of mold clamping plates 72 of the blow-molding part 6 are driven by the motor (75a) of the mold opening and closing part 75 during the opening and closing operation of the blow cavity split molds 71. Therefore, the responsiveness and the position accuracy are higher, and the dry time is shorter than those in the case where the mold opening and closing operation of the blow cavity split molds 71 is performed by hydraulic pressure. In addition, in the above mold opening and closing part 75, the power consumption can be reduced, and the cooling water for the operation hydraulic fluid can also be reduced as compared with the hydraulic pressure control that necessitates driving of the motor all the time for maintaining the hydraulic pressure. Furthermore, only a small moving amount of the piston 73a is needed at the time of clamping, so that the amount of the operation hydraulic fluid can be reduced as compared with the case where the mold opening and closing operation and the mold clamping operation are all using hydraulic mechanisms.

On the other hand, the blow cavity split mold 71 is clamped by the mold clamping part 73, to which the hydraulic cylinder is applied. By using the hydraulic mechanism for clamping the blow cavity split mold 71, which necessitates a large load, it becomes possible to significantly suppress the cost of the apparatus as compared with the configuration of clamping the mold using the motor.

### (Step S104: Container Taking-Out Step)

When the blow-molding ends, the blow-molding mold is opened. Accordingly, the container becomes movable from the blow-molding part 6.

Subsequently, the transfer plates 12 rotate by a predetermined angle, and the container is conveyed to the take-out part 7. In the take-out part 7, the neck portion of the container is released from the neck mold 22, and the container is taken out of the blow-molding apparatus 1 to the outside.

Heretofore, one cycle of the blow-molding method ends. Then, by rotating the transfer plates 12 by a predetermined angle, each step from the above S101 through S104 is repeated. During the operation of the blow-molding apparatus 1, containers corresponding to four cycles having a time difference in every one step are produced in parallel.

Note that due to the structure of the blow-molding apparatus 1, the standby times of the injection molding step, the temperature adjusting step, the blow-molding step, and the container taking-out step are the same. Similarly, the conveyance times between the respective steps are also the same.

The present invention is not limited to the above embodiments, and various improvements and design changes may be made without departing from the gist of the present invention.

For example, the motor used for each part in the above embodiments is not limited to the servomotor. For example, another motor such as a stepping motor may be used.

In addition, the embodiments disclosed herein are to be considered in all respects as illustrative and non-limiting ones. The scope of the present invention is indicated not by the above description but by the scope of claims, and it is intended that meanings equivalent to the claims and all modifications within the scope are included.

### Reference Signs List

- 1: Blow-molding apparatus
- 3: Injection device
- 3c: Drive actuator
- 4: Injection molding part
- 5: Temperature adjusting part
- 6: Blow-molding part
- 12: Transfer plate
- 20: Preform
- 21: Injection mold
- 22: Neck mold
- 31: Mold opening and closing mechanism
- 40: Lifting and lowering mechanism
- 42a, 52a, 75a: Servomotor
- 50: Mold clamping cylinder
- 60: Mold lifting and lowering mechanism
- 71: Blow cavity split mold
- 72: Mold clamping plate
- 73: Mold clamping part
- 75: Mold opening and closing part

## Claims

1. A blow-molding apparatus comprising:
an injection molding part that injects a resin material into an injection mold to produce a preform having a bottomed cylindrical shape;
a temperature adjusting part that adjusts a temperature of the preform obtained by the injection molding part; and
a blow-molding part that blow-molds the preform having the temperature that has been adjusted in a state of having residual heat from injection molding to produce a resin container, wherein
the injection molding part includes:
an injection device that injects the resin material into the injection mold by control of a first motor;
a mold opening and closing mechanism that opens and closes the injection mold by a second motor; and
a hydraulic cylinder that clamps the injection mold after the injection mold is closed.

2. The blow-molding apparatus according to claim 1, further comprising a transfer plate, which includes a neck mold for holding the preform, and which conveys the preform to each part, wherein
the injection molding part further includes a transfer plate lifting and lowering mechanism that moves the transfer plate in a vertical direction with respect to the injection mold by a third motor.

3. The blow-molding apparatus according to claim 2, wherein the temperature adjusting part includes a mold lifting and lowering mechanism that moves a temperature adjusting mold with respect to the preform by a fourth motor.

4. The blow-molding apparatus according to one of claims 1 to 3, wherein
the blow-molding part includes:
a pair of blow split molds that define a shape of the container;
a split mold opening and closing part that drives the blow split molds in an opening and closing direction by a fifth motor; and
a hydraulic driving part that clamps the blow split molds after the blow split molds are closed.
